# EUROPEAN PATENT APPLICATION

(11) **EP 2 481 475 A1**
(43) Date of publication of application: **01.08.2012**
(21) Application number: 12164260.7
(22) Date of filing: 14.05.2008
(51) Int. Cl.: B01D 71/62, B01D 53/22, B01D 67/00, B01D 61/02

(54) **Cross-linked polyimide membranes**

(30) Priority: 14.05.2007 GB 0709228
(62) Divisional of application: 08748053.9
(71) Applicant: Evonik Fibres GmbH, 4860 Lenzing (AT)
(72) Inventor: Vandezande, Pieter, 2200 Herentals (BE); Vanherck, Katrien, 2800 Mechelen (BE); Vankelecom, Ivo, 3052 Blanden (BE)
(74) Representative: Wolf, Oliver

(57) **Abstract**

The present invention describes the use of a membrane comprising polyimide and comprising at least one cross-linking amino-compound for ultrafiltration with organic solvents. The description provides a method for improving the performance of polyimide membranes as used in solvent-resistant nanofiltration. The method allows to improve the solvent stability of the polyimide membranes to solvents or solvent mixtures that would dissolve polyimide under the conditions applied during the filtration, such as dimethylformamide (DMF), N-methylpyrrolidinone (NMP), dimethylacetamide (DMAC), tetrahydrofuran (THF), γ-butyrolacton (GBL), dimethylsulphoxide (DMSO) and chlorinated solvents.

## Description

### FIELD OF THE INVENTION

The present invention relates to improving the performance of polyimide membranes as used in solvent-resistant nanofiltration, and more specifically to extending the solvent stability of the polyimide membranes to solvents or solvent mixtures that would dissolve polyimide under the conditions applied during filtration.

### BACKGROUND OF THE INVENTION

Nanofiltration is a pressure-driven separation process. It involves a process of separating two or more components over a membrane by means of a pressure gradient, generated by applying pressure to the feed side of the membrane, either a gas pressure or a mechanical pressure. The pressure-driven membrane processes can be divided into 4 groups, depending on the applied pressure, for which typical values are given in table 1 (Mulder, 1996).When referring to solvent applications in specific, the term solvent resistant nanofiltration (SRNF) also includes reverse osmosis and the high pressure end of ultrafiltration.

**Table 1.: Pressure driven membrane processes**

| Membrane process | Typical pressure (bar) | Typical flux (1/m² bar h) | Morphology of the Selective layer |
|---|---|---|---|
| Microfiltration | 0,1-2 | >50 | Porous |
| Ultrafiltration | 1 - 5 | 10 - 50 | Porous |
| Nanofiltration (Hyperfiltration) | 5 - 20 | 1,4 - 12 | Porous / dense |
| Reverse Osmosis | 10 - 100 | 0,05 - 1,4 | Dense |

The volume flux through the membrane depends on the pressure gradient over the membrane, the feed properties as well as on the hydraulic resistance of the membrane. The latter depends on membrane properties, such as the pore size and structure, the porosity and the thickness of the selective layer of the membrane.

The rejection of solutes by the membrane is determined by different mechanisms, such as the distribution of components between the liquid and the membrane phase, the interaction of solids with other components in the liquid and with the pore wall or polymer chains. In general, liquid-membrane interactions, solute-membrane interactions and solute-liquid interactions play a roll in the separation process. The separation process can be disturbed by an unwanted swelling of the membrane (in certain solvents), which can for instance decrease the selectivity and eventually lead to dissolution of the membrane polymer.

Pressure driven membrane separation processes are still mainly applied in water treatment processes, but they are more and more used for separations in non-aqueous streams, such as separations of dyes or surfactants out of solvents, fractionation of polymers, separation of dissolved catalysts from products and solvents, separations of pharmaceutical intermediates and products from solvents, separations of triglycerides and phospholipids from oil mycella, oil deacidification, recovery of extraction solvents, separation of hydrocarbons and lube oils from solvents, solvent exchange, ...

Microfiltration (MF), ultrafiltration (UF), nanofiltration (NF) and reverse osmosis (RO) membranes are often prepared from polymer materials which are unstable in certain solvents under certain conditions. This is advantageous at the level of processability where dissolution of the polymer is often essential to prepare defect-free membranes, for instance via the process of phase inversion. During the actual filtration, the lack of membrane stability is often observed as an excessive swelling or ultimately even as the complete dissolution of the polymer in the organic solvents constituting the feed to be treated. Consequently, membrane selectivities drop and membranes become useless. Modifying polymeric membranes to improve their resistance in organic solvents is of high importance to extend the applications of pressure-driven membrane processes in non-aqueous streams.

In principle, ceramic membranes are resistant in any organic solvent within a certain pH-range and even at elevated temperatures, but they are expensive and often show low or even no fluxes for organics as soon as the pore sizes decrease to the lower NF-range (typically from 400 Da onwards). Ceramic membranes have been described, involving hydrophobisation of the hydrophilic inorganic membranes in the pores. Silica/Zirconia membranes and y-alumina membranes have been studied for non-aqueous applications. (Tsuru et al., 1998; Tsuru et al., 2000; Tsuru et al., 2001; Tsuru et al., 2006; Verrecht et al., 2006). The silylation of ceramic mesoporous membranes with silylating agents has been reported. A variety of polymeric membranes has been prepared with excellent applicability in organic solvents such as toluene, hexane, alcohols, ... Polyimide membranes have been used for the separation of aromatic from non-aromatic hydrocarbons (US patent 6,180,008), for the separation of lube oil from organic solvents such as toluene and hexane (US patent 5,264,166), for the recovery of organic solvents and valuable components (Cuperus, 2005) and so on. Polyacrylonitrile has for instance been modified for applications in organic solvents such as DMF by using specially designed monomer units (Hicke et al., 2002). Other examples of polymers used in solvent-resistant nanofiltration membranes are polyetherimide, polyamide, polysulphone, poly (ether ether ketone) cellulose actetate, polybenzimidazole, polydimethylsiloxane and so on.

Some solvent classes however lead to severe stability problems for these polymers. Particularly, the group of aprotic solvents such as dimethylformamide (DMF), N-methylpyrrolidinone (NMP), dimethylacetamide (DMAC), tetrahydrofuran (THF), γ-butyrolacton (GBL), dimethylsulphoxide (DMSO) and chlorinated solvents, remains a problematic solvent class. Highly stable cross-linked elastomers, such as polydimethylsiloxane, are too hydrophobic to be applied successfully in these solvents. Linder et al. disclosed a post-synthesis treatment for polymeric membranes to render them insoluble in aprotic solvents (such as NMP, DMF,...) and useful in the SRNF-range (Linder, 1991). They modified polyacrylonitrile membranes by chemical cross-linking in an aqueous base (NaOH) solution at elevated temperatures.

Depending on their chemical composition, polyimide based membranes dissolve well in selected chlorinated solvents. Polyimide membranes will thus dissolve when immersed in feeds containing these solvents, therefore a modification of such membranes is needed to avoid their dissolution in said feeds.

Polyimides form a class of polymers characterised by the imide bond within the repeating unit. There are two general types of polyimides. One type, so-called linear polyimides, are made by combining imides into long chains. Aromatic heterocyclic polyimides are the other usual kind, where both carbon atoms in the imide structure belong to an aromatic ring. Many fluorinated polymers have been described in literature as well. Even though performing very well in gas separations, their potential for SRNF in organic solvents is restricted due to too low affinity for the permeating hydrocarbon.

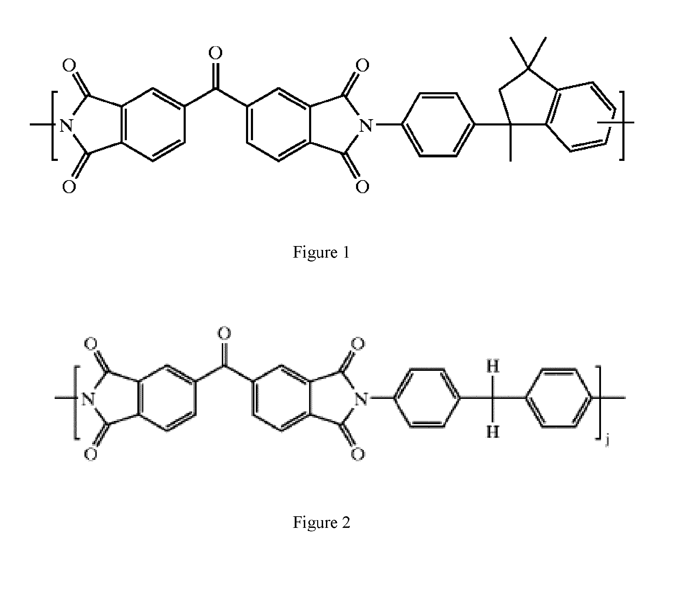

Even though the imide bond characterises the polyimides, the chemical composition of the whole repeating monomer unit defines the solvent stability. Among commercially available polyimides for instance, Matrimid polyimide (Huntsman) with 5(6) amino-1(4'aminophenyl)-1,3,-trimethyllindane as chemical composition (fig.1) dissolves much more readily than the related Lenzing P84 polyimid (Degussa), derived from aromatic dianhydrides and aromatic diisocyanates (fig.2).

For non-membrane purposes, a large variety of methods has been described for the cross-linking of polyimide in literature. Different authors propose the chemical modification of the polyimide monomers for further cross-linking, for instance by introducing cross-linkable groups during the polymer synthesis already (JP 2001323067, WO 2003053548 A1; (Park et al., 2006; Seung San Han et al., 2007). The preparation of cross-linked polyimide from cross-linked polyamides was studied by Hiroshi Itatani (WO 2004087793 A1). These methods are usually quite complicated and demand a lot of organic synthesis effort. Cross-linking of polyimide may be carried out in hot air or ambient environment (JP 09324049; Liu et al., 1999) or by UV-irradiation (Liu et al., 1999). U.S. Pat. No. 3,533,997 discloses aromatic polyimides which incorporate a pendant carboxylic acid function and the cross-linking of such materials through interaction of the pendant carboxylic acid functions and di- to tetraamine radicals. U.S. Pat. No. 4,734,464 discloses a solvent resistant composition comprising a siloxane-containing polyimide and an aromatic compound containing at least two reactive groups such as amino groups which are heated to at least 150.degree. C. EP203,770 and EP244,967 disclose the preparation of polyamides through the high temperature interaction between an aromatic bisimide compound and amine functions.

For membrane applications more in specific, different polyimide cross-linking methods have been applied, but only aiming at an increased performance of membranes for gas separation, for pervaporation or for electronic device manufacture. The chemical reaction of polyimide membranes with primary or secondary mono-, di-, tri- or polyamines such as ethylenediamine and p-xylenediamine is such a described cross-linking method (US patent 4,981,497; WO 2006009520 A1; Okamoto et al., 1999; Shao et al., 2005; Liu et al., 2001; Qiao and Chung, 2006). U.S. Pat. No. 4,981,497 discloses membranes consisting of aromatic polyimides that are cross-linked by chemical reaction with primary or secondary mono-, di-, tri- or polyamines, aiming at improved gas separation characteristics and improved environmental resistance.

For pressure-driven processes such as SRNF, cross-linked polyimide membranes have not been disclosed except for the cross-linked membranes commercialized by the company NITTO (Japan) which have some solvent resistance in liquids. However, these membranes are limited to the UF range and have a low efficiency in operation. It is indeed non-obvious to modify a preformed membrane in such a way that chemical stability is realised, while maintaining good performance in the SRNF-range, which requires a dense membrane structure. It is known that many chemical (cross-linking reactions,...) or physical (plasma treatment,...) treatments either breakdown polymer chains (see example 6), thus destroying the mechanical stability of the membranes and/or increasing the pore sizes of the membrane, or modify the membrane surface to such an extend that affinity for the permeating compounds and hence their permeation has drastically decreased. (U.S.Patent 4,981,497; Aerts et al., 2006)

The present invention provides a method for the modification of an ultra- or nanofiltration polyimide membrane in order to increase its solvent resistance while maintaining the permeability of the membrane.

### DETAILLED DESCRIPTION OF THE INVENTION

### Legends to the figures

Figure 1: Chemical structure of the commercial polyimide Matrimid® (Huntsman)
Figure 2: Generalized chemical structure of the commercially available polyimide under the trade name Lenzing® P84

### Description

In a first object the present invention provides a method for the modification of an ultra- or nanofiltration membrane comprising polyimide within its selective layer in order to increase the resistance of the membrane against organic solvents, while maintaining its permeability, said method comprising the cross linking of the polyimide using an amino-compound. Preferably this cross linking step is followed by subjecting the cross-linked membrane to a solvent exchange procedure, where after the membrane is optionally dried.

For cross linking the polyimide membrane it is preferred to use amino compounds selected out of the group consisting of cyclohexylamine, p-xylylene diamine, 1,2-diaminoethane, 1,6-hexane diamine, 3-aminopropylmethyldiethoxysilane, tris(2-aminoethyl)amine, triethylenetetramine, pentaethylenehexamine, polyethylenimine, polyether diamines based predominantly on a polyethylene oxide backbone with a molecular weight of 50 to 20,000, trimethoxysilylpropyl-substituted polyethyleneamine having a molecular weight of 200 to 200,000, polyethyleneamine having a molecular weight of 1,000 to 200,000, aqueous ammonium hyroxide, and isobutyl amine.

Preferably, the cross-linking of the polyimide membrane is obtained by completely or partially immersing the membrane in a solution comprising a suitable amine compound for an appropriate period of time. As one skilled in the art will appreciate, the rate of reaction between the amino-compound and the imide-containing material will vary strongly depending on their chemical identity and the process conditions. Long reaction times or even curing at elevated temperatures may be necessary, depending on the chemical compositions of both the polyimide as the amino compound used for cross-linking. In an embodiment of the present invention the amine compound is dissolved in methanol, however, other solvents can be used, which solubilise the amine compounds without dissolving the uncrosslinked polyimide polymer or negatively affecting the cross linking reaction. Examples of such alternative solvents are ethanol and isopropanol amongst others. Upon termination of the reaction it is preferred that the cross linked polyimide membrane is thoroughly rinsed with methanol to remove all reacting compound from the membrane. Thereafter, the membrane can be subjected to a solvent-exchange procedure in for instance glycerol-containing isopropanol before drying, to prevent pores from collapsing, which may have a negative effect on permeability in pressure-driven filtrations. In a particular embodiment the solvent exchange procedure comprises the immersion of the membrane in an isopropanol bath for at least two hours, followed by an immersion in a isopropanol-glycerol bath (typically 60-40) for at least three days.

Preferably the method according to the present invention is used in the modification of membranes comprising more than 30%, more preferably more than 60%, most preferably more than 90%, for instance more than 95% of polyimide polymer in the selective layer as a fraction of the total polymer in the selective layer. In a preferred embodiment the method according to the present invention is used in the modification of membranes wherein polyimide is the only polymer in the selective layer of the membrane. In another preferred embodiment the polyimide comprised in the selective layer of the membrane does not comprise pendant carboxylic acid functions or siloxane.

Membranes suitable for modification according to the method of the present invention can be obtained by casting a polyimide-containig polymer solution. Casting of the membrane may be performed by any number of casting procedures cited in the literature, for example U.S. Patent Nos. 3,556,305, 3,567, 810, 3,615,024, 4,029,582 and 4,188,354; GB-A-2,000,720; Office of Saline Water R & D Progress Report No. 357, October 1967; Reverse Osmosis and Synthetic Membranes, Ed. Sourirajan; Murari et al, J. Membr. Sci. 16: 121-135 and 181-193 (1983). Thus, the polymer or its derivatives may be dissolved in a suitable solvent or solvent mixture (e.g. NMP and THF), which may or may not contain cosolvents, partial solvents, nonsolvents, salts, surfactants or electrolytes, for altering or modifying the membrane morphology and its flux and rejection properties.

The casting solution may be filtered by any of the known processes (e.g. pressure filtration through microporous filters, or by centrifugation), and cast on a support such as glass, metal, paper, plastic, etc., from which it may then be removed. It is preferred, however, to cast onto a porous base support from which the membrane is not removed. Such porous base supports may be non-woven, or woven, including cellulosics, polyethylene, polypropylene, nylon, vinyl chloride homo-and co-polymers, polystyrene, polyesters such as polyethylene terephthalate, polyvinylidene fluoride, polytetrafluoroethylene, polysulfones, polyether sulfones, poly-ether ketones, polyphenylene oxide, glass fibers, porous carbon, graphite, inorganic membranes based on alumina and/or silica (possibly coated with zirconium and/or other oxides) . The membrane may otherwise be formed as a hollow fiber or tubelet, not requiring a support for practical use; or the support may be of such shape, and the membrane is cast internally thereon.

The concentration of polymer in the casting solution may vary as a function of its MW and additives, and may be for example, within the range of about 5-50%, preferably about 10-50%, most preferably about 15-30%. The casting temperature may vary from about-20 to about 100°C, preferably about 0 to 60°C, depending on the particular polymer, its molecular weight and the cosolvents and additives in the casting solution.

The modification according to the method of the present invention results in ultra- and nanofiltration membranes with improved stability and high permeabilities in organic solvents and good rejection for low-molecular weight compounds between 200-2000 Da, for instance between 200 and 700 Da. The improved stability of the polyimide membranes obtained according to the present invention is particularly useful when the membranes are used in separation processes in organic solvents and more particularly in aprotic solvents such as dimethylformamide (DMF), N-methylpyrrolidinone (NMP), dimethylacetamide (DMAC), tetrahydrofuran (THF), γ-butyrolacton (GBL), dimethylsulphoxide (DMSO) and chlorinated solvents.

The invention is further illustrated by way of understanding non-limiting examples.

### EXAMPLES

Membranes have thus been created by treating Matrimid 9725 (Huntman) polyimide membranes with a solution of p-xylenediamine in methanol (10% w/v) for different times up until 2 hours. The membranes showed high solvent fluxes (~31/m² bar h) and retentions of bengal rose (~98%) and methylorange (~80%) in DMF, and were found to be stable in DMAC, DMSO and NMP. The results demonstrate the surprising efficacy of the chemical modification of a polyimidemembrane according to the method of the present invention.

### Example 1:

An 18wt% solution of matrimid 9725 polyimide (Huntsman) was made in NMP and THF (ratio 2:1) by stirring overnight. The polymer solution was cast on a polypropylene non-woven support by an automated casting device set at a gap of 250µm. The resulting film was immersed in a de-ionized water bath after 30s of evaporation.

Parts of the resulting membrane were immersed in a solution of p-xylenediamine in methanol for cross-linking. After 5, 60 and 120 minutes, the membrane slabs were removed and rinsed with methanol to remove all reactant. The membranes were then immersed in IPA until use for immersion experiments. Parts of the cross-linked membranes were immersed in DMSO for several days, after which they were again immersed in IPA until they were used for filtrations.

Filtrations were carried out in a stainless steel dead-end filtration cell, pressurized with nitrogen gas to 6 bars, with a solution of bengal rose in IPA (35µM) on top of the cross-linked membranes, before as well as after their immersion in DMSO. Uncross-linked membrane slabs were immersed in DMSO in which they dissolved after some hours. The immersion/filtration tests show that cross-linked membranes retain there excellent performance after immersion in DMSO.

| | | **before immersion** | | **after immersion in DMSO** | |
|---|---|---|---|---|---|
| wt% PI | Cross-linking time (minutes) | Permeance 1/m² bar h | Rejection % | Permeance 1/m² bar h | Rejection % |
| 18 | 5 | 2,22 | 92,9 | 1,19 | 99,0 |
| 18 | 60 | 0,85 | 97,1 | 1,96 | 96,6 |
| 18 | 120 | 0,75 | 96,4 | 2,59 | 99,2 |

### Example 2

Membranes were prepared and cross-linked as in example 1. Cross-linked membrane slabs were immersed in NMP for several days. Uncross-linked membrane slabs were immersed in NMP in which they dissolved after some hours. Filtrations were carried out as in example 1. The results show that 60 minutes or longer cross-linked membranes retain their excellent performance in IPA after immersion in NMP

| | | **before immersion** | | **after immersion in NMP** | |
|---|---|---|---|---|---|
| wt% PI | Cross-linking (minutes) | permeance 1/m² bar h | rejection % | permeance 1/m² bar h | Rejection % |
| 18 | 5 | 2,22 | 92,9 | 1,08 | 98,3 |
| | | | | (high occurrence of defects) | |
| 18 | 60 | 0,85 | 97,1 | 2,05 | 98,2 |
| 18 | 120 | 0,75 | 96,4 | 1,79 | 97,2 |

The first result proves the non-obvious success of a chemical modification to a membrane.

### Example 3

Membranes were prepared and cross-linked as in example 1, but an NMP-exchanged clear solution (NMP-CS) was added as an extra component to the polymer casting solution. This NMP-CS emulsifies the polymer dope before casting, which was further treated as in example 1. During this modified phase-inversion process called 'solidification of emulsified polymer dope by phase inversion' or 'SEPPI' (Gevers, 2006), a membrane is created with uniform spherical pores that is more resistant to compaction at high pressures. Membranes were further treated as in example 1. Cross-linked membrane slabs were immersed in DMF. Uncross-linked slabs that were immersed in DMF dissolved completely after some hours. Filtrations were carried out as in example 1.

Results show that a cross-linking treatment of 60 minutes or more is sufficient to create membranes stable in DMF, which retain their excellent performance in IPA after immersion in DMF.

| | | | **before immersion in DMF** | | **after immersion in DMF** | |
|---|---|---|---|---|---|---|
| wt% PI | NMP-CS | Cross-linking (minutes) | Permeance 1/m² bar h | rejection % | permeance 1/m² bar h | Rejection % |
| 18 | 18 | 5 | 1,62 | 99,5 | 0,62 | 61,3 |
| 18 | 18 | 60 | 0,89 | 94,9 | 0,88 | 95,6 |
| 18 | 18 | 120 | 0,53 | . | 0,89 | 97,1 |
| 18 | 0 | 60 | 0,53 | 94,1 | 3,62 | 98,9 |

The first result proves the non-obvious success of a chemical modification to a membrane.

### Example 4

Membranes were prepared and cross-linked as in example 1. Cross-linked membrane slabs were immersed in DMAC. Uncross-linked membrane slabs that were immersed in DMAC dissolved after some hours. Filtrations were carried out as in example 1.

Results show that the cross-linking treatment creates membranes that are stable in DMAC, which retain their excellent performance in IPA after immersion in DMAC.

| | | **before immersion** | | **after immersion in DMAC** | |
|---|---|---|---|---|---|
| wt% PI | Cross-linking (minutes) | permeance 1/m² bar h | Rejection % | permeance 1/m² bar h | rejection % |
| 18 | 5 | 2,22 | 92,9 | 1,68 | 97,5 |
| 18 | 60 | 0,85 | 97,1 | 1,80 | 97,7 |
| 18 | 120 | 0,75 | 96,4 | 1,77 | 98,6 |

### Example 5

Polyimide membranes of different compositions that were previously optimised for their use in IPA were prepared and cross-linked for 60 minutes as in example 1. Membranes with excellent fluxes and high rejections for bengal rose in DMF were obtained.

| **Composition (wt%)** | | | | | | **performance in DMF** (after 60 minutes cross-linking) | |
|---|---|---|---|---|---|---|---|
| Matrimid | NMP | THF | Hexane | Aceton | IPA | **permeance 1/m² bar h** | **rejection %** |
| 17,70 | 47,82 | 33,75 | | 0,69 | | 3,35 | 94,73 |
| 28,00 | 48,54 | 33,46 | | | | 3,89 | 95,56 |
| 20,00 | 50,39 | 25,16 | | 2,46 | | 2,57 | 97,12 |
| 18,00 | 45,74 | 31,26 | | | 5,00 | 3,94 | 98,70 |
| 16,00 | 47,45 | 20,84 | 5,71 | | | 5,42 | 97,10 |

### Example 6

Polyacrylonitrile membranes may loose their mechanical stability under standard cross-linking conditions and they become fragile. Cross-linking at temperatures close to the T_{glass} (~79°C) of polyacrylonitrile or cross-linking for extended time or with highly-concentrated base solution but at lower temperatures can lead to a plastification of the membrane.

| Unstable cross-linked polyacrylonitrile membranes | | | | |
|---|---|---|---|---|
| Membrane | | Cross-linking procedure | | |
| Base concentration | | | | |
| %PAN | Solvent | (wt%) | Temperature (°C) | Time |
| 17 | DMSO | 10 | 70 | >10 minutes |
| 17 | DMSO | 10 | 30 | 8 hours |
| 17 | DMSO | 20 | 50 | 1 hours |
| 17 | DMSO | 10 | 50 | 2 hours |

None of the thus-formed membranes could be used in filtrations.

### Example 7

A 19% solution of Lenzing P84 polyimide was made by dissolving the polymer powder (Evonik) in NMP/THF mixtures (ratio 5:1). The homogenised polymer solution was cast on a polypropylene/polyethylene non-woven backing by an automated casting device set at a gap of 250µm. The resulting film was immersed in a de-ionized water bath after a 60 s evaporation time. The resulting membranes were immersed for 24h in a solution of p-xylenediamine in methanol for chemical cross-linking, rinsed with methanol and posttreated involving immersion in 2-propanol and a toluene/2-methyl-4-pentanone/mineral oil solution (volume ratio 40/40/20).

The membranes were used for the recycling of Cu(I) catalysts from Click-chemistry reactions performed in DMF and THF. Reaction products should be retained, while pure solvent containing the Cu(I) catalyst should permeate to be re-used in a next reaction.

Membranes were mounted in a dead-end, stainless steel filtration cell with an active membrane surface of 15.2 cm², and sealed with Kalrez^{®} O-rings. Prior to filtration of a reaction mixture, membranes were pre-conditioned by a filtration with pure DMF. Feed solutions (generally 20 ml) were stirred and pressurized to 10 bar with nitrogen gas. A 3.36 1/h.m².bar permeability was measured with 86.8% of the total Cu-catalyst retrieved in the permeate. 1H NMR semi-quantitatively demonstrated the presence of some traces of the click reaction product in the permeates.

### REFERENCES

Aerts, S., A. Vanhulsel, et al. (2006). "Plasma-treated PDMS-membranes in solvent resistant nanofiltration: Characterization and study of transport mechanism." Journal of Membrane Science 275(1-2): 212-219.
Bayer, H. (2004). European Patents.
Cuperus, F. P. (2005). "Reovery of organic solvents and valuable components by membrane separation." Chemie Ingenieur Technik 77(8): 1000-1001.
Gevers, L. E. M., P. Vandezande, et al. (2006). "A novel method to prepare porous membranes/polymers with easy control over porosity and increased compaction resistance." Desalination 199(1-3): 34-36.
Hicke, H. G., I. Lehmann, et al. (2002). "Preparation and characterization of a novel solvent-resistant and autoclavable polymer membrane." Journal of Membrane Science 198(2): 187-196.
Linder, C. P., M.; Nemas, M.; Katraro, R. (1991). Solvent Stable Membranes. US Patents 5,039,421.
Liu, Y., C. Pan, et al. (1999). "Effect of crosslinking distribution on gas permeability and permselectivity of crosslinked polyimides." European Polymer Journal 35(9): 1739-1741.
Liu, Y., R. Wang, et al. (2001). "Chemical cross-linking modification of polyimide membranes for gas separation." Journal of Membrane Science 189(2): 231-239.
Mulder, M. (1996). Basic principles of membrane technology. Dordrecht, Kluwer Academic Publishers.
Okamoto, K., H. Y. Wang, et al. (1999). "Pervaporation of aromatic/non-aromatic hydrocarbon mixtures through crosslinked membranes of polyimide with pendant phosphonate ester groups." Journal of Membrane Science 157(1): 97-105.
Park, H. B., C. H. Lee, et al. (2006). "Effect of crosslinked chain length in sulfonated polyimide membranes on water sorption, proton conduction, and methanol permeation properties." Journal of Membrane Science 285(1-2): 432-443.
Qiao, X. Y. and T. S. Chung (2006). "Diamine modification of P84 polyimide membranes for pervaporation dehydration of isopropanol." Aiche Journal 52(10): 3462-3472.
Seung San Han ; Seung Soon Im , J. C. W., Jae Heung Lee , and Y. S. K. Kil-Yeong Choi (2007). "Synthesis and characterization of new polyimides containing ethynylene linkages." European Polymer Journal 43: 1541 - 1548.
Shao, L., T. S. Chung, et al. (2005). "Polyimide modification by a linear aliphatic diamine to enhance transport performance and plasticization resistance." Journal of Membrane Science 256(1-2): 46-56.
Tsuru, T., M. Miyawaki, et al. (2006). "Reverse osmosis of nonaqueous solutions through porous silica-zirconia membranes." Aiche Journal 52(2): 522-531.
Tsuru, T., T. Sudoh, et al. (2001). "Nanofiltration in non-aqueous solutions by porous silica-zirconia membranes." Journal of Membrane Science 185(2): 253-261.
Tsuru, T., T. Sudou, et al. (2000). "Permeation of liquids through inorganic nanofiltration membranes." Journal of Colloid and Interface Science 228(2): 292-296.
Tsuru, T., S. Wada, et al. (1998). "Silica-zirconia membranes for nanofiltration." Journal of Membrane Science 149(1): 127-135.
Verrecht, B., R. Leysen, et al. (2006). "Chemical surface modification of gamma-Al2O3 TiO2 toplayer membranes for increased hydrophobicity." Desalination 200(1-3): 385-386.

## Claims

1. Use of a membrane comprising polyimide and comprising at least one cross-linking amino-compound for ultrafiltration with organic solvents.

2. Use according to claim 1 wherein the membrane comprises a polyimide with the understanding general structure:

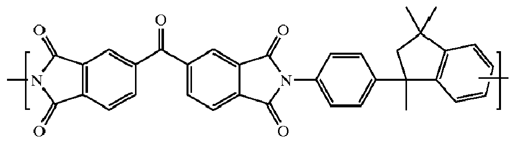

3. Use according to claim 1 wherein the membrane comprises a polyimide with the understanding general structure:

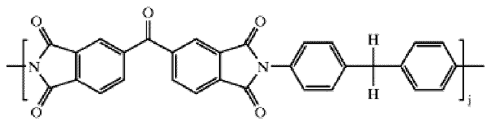

4. Use according to claims 1 to 3 wherein the cross-linking amino-compound is selected out of the group consisting of cyclohexylamine, p-xylylene diamine, 1,2-diaminoethane, 1,6-hexane diamine, 3-aminopropylmethyldiethoxysilane, tris(2-aminoethyl)amine, triethylenetetramine, pentaethylenehexamine, polyethylenimine, polyether diamines based predominantly on a polyethylene oxide backbone with a molecular weight of 50 to 20,000, trimethoxysilylpropyl-substituted polyethyleneamine having a molecular weight of 200 to 200,000, polyethyleneamine having a molecular weight of 1,000 to 200,000, aqueous ammonium hyroxide, and isobutyl amine.

5. Use according to claims 1 to 4 wherein the membrane is cross-linked to a degree making it resistant to organic solvents and mixtures thereof.

6. Use according to claim 5 that specifically resists aprotic solvents.

7. Use according to any one of claims 1 to 6 wherein said membrane has a molecular weight cut off between 200-2000Da and a permeability of at least 1 l/m² bar h.

8. Use according to any one of claims 1 to 7 wherein the separation process involving liquid organic solvents is pressure driven.

9. Use according to any one of claims 1 to 7 for separating a compound with molecular weight between 200 and 2000 Da from a solution of said compound in an organic solvent or solvent mixture.

10. Use according to claim 9 wherein said organic solvent is or said organic solvent mixture comprises an aprotic solvent
